# EUROPÄISCHE PATENTSCHRIFT

(11) **EP 0 924 055 B1**
(45) Veröffentlichungstag und Bekanntmachung des Hinweises auf die Patenterteilung: **17.12.2003**
(21) Anmeldenummer: 98123175.6
(22) Anmeldetag: 04.12.1998
(51) Int. Cl.: B29C 69/00, B29D 31/02, F16C 13/00, F16C 33/20, B29C 45/16, B29C 45/14

(54) **Verfahren zum Spritzgiessen einer Laufrolle**
Method of injecting a roller
Procédé pour mouler par injection un galet

(30) Priorität: 10.12.1997 DE 19754733
(43) Veröffentlichungstag der Anmeldung: 23.06.1999
(73) Patentinhaber: Hachtel, Steffen, 73650 Winterbach (DE)
(72) Erfinder: Hachtel, Steffen, 71522 Backnang (DE)
(74) Vertreter: Möbus, Daniela, Dr.-Ing.

(56) Entgegenhaltungen:
- EP-A- 0 679 499
- EP-A- 0 706 875
- DE-A- 2 355 273
- DE-A- 2 420 264
- DE-A- 19 607 645

## Beschreibung

Die Erfindung betrifft ein Verfahren zur Herstellung eines spritzgegossenen Bauteils bestehend aus einem mehrteiligen Körper sowie einer Lagerbuchse.

Ein solches Verfahren ist aus der DE 196 07 645 A1 zur Fertigung einer spritzgegossenen Laufrolle bereits bekannt. Die Laufrolle besteht dabei aus zwei, in axialer Richtung zusammengesetzten Rollenteilen sowie einer Lagerbuchse. Die beiden Rollenteile sowie die Lagerbuchse werden in unterschiedlichen Hohlräumen einer gemeinsamen Spritzgießform gespritzt. Beim Öffnen der Spritzgießform werden die beiden Rollenteile an unterschiedlichen Hälften der Spritzgießform und die Lagerbuchse ebenfalls an einer der Spritzgießformhälften festgehalten. Durch Verdrehen der beiden Spritzgießformhälften zueinander werden die beiden Rollenteile einander gegenübergestellt und mit Hilfe eines Teils der Spritzgießform zusammengepresst und so zusammenmontiert. Anschließend werden die Spritzgießformhälften erneut gegeneinander verdreht, bis die Lagerbuchse den beiden montierten Rollenteilen gegenübersteht und somit die Rollenteile auf die Lagerbuchse durch einen Teil der Spritzgießform aufgepresst werden können. Das bekannte Verfahren zeichnet sich dadurch aus, dass alle Komponenten des fertigen Bauteils in einer Spritzgießform gegossen und montiert werden können, wodurch sich eine sehr rationelle Fertigung des Bauteils ergibt.

In der DE-A-23 55 273 wird ein Verfahren zur Herstellung einer Führungsrolle mit einem einteiligen Rollenkörper und einer Achse beschrieben, bei dem die Achse in den Rollenkörper eingespritzt wird. Die einteilige Ausbildung des Rollenkörpers beschränkt jedoch die geometrisch herstellbaren Formen der Rolle und damit auch die Auswahl an möglichen herstellbaren Werkstoffkombinationen zwischen Rollenkörper und Achse.

Der vorliegenden Erfindung liegt die Aufgabe zugrunde, die bekannten Verfahren dahingehend weiterzubilden, dass sich die Montage des herzustellenden Bauteils mit Lagerbuchse vereinfacht und sich die Auswahl an möglichen Werkstoffkombinationen zwischen Rollenkörper und Lagerbuchse vergrößert.

Die Aufgabe wird durch ein Verfahren der eingangs genannten Art erfindungsgemäß durch die Merkmale des Kennzeichens des beillegenden Anspruch 1 gelöst. Dadurch, dass zunächst der Körper in einer Spritzgießform gegossen und montiert wird und anschließend die Lagerbuchse in den in der Spritzgießform festgehaltenen Körper eingespritzt wird. Durch das direkte Einspritzen der Lagerbuchse in den Körper entfällt der seither notwendige Montageschritt zwischen Körper und Lagerbuchse. Die Erfindung umfaßt jedoch auch ein Verfahren nach Anspruch 2, bei dem zunächst die Lagerbuchse in einer Spritzgießform gegossen und anschließend die Teile des Körpers auf die in der Spritzgießform festgehaltene Lagerbuchse aufgespritzt werden. Auch hier entfällt der Montageschritt zwischen Lagerbuchse und Körper. Die Montage der Teile des Körpers kann wie im Verfahren nach der DE 196 07 645 A1 in der Spritzgießform erfolgen. zur Ermöglichung der freien Drehbarkeit des Körpers auf der Lagerbuchse ist dafür Sorge zu tragen, dass Lagerbuchse und Körper beim Spritzen des zuletzt gefertigten Elements nicht aneinander haften. Dies kann dadurch erreicht werden, dass die Lagerbuchse eine andere Volumenkontraktion aufweist als der Körper des Bauteils. Durch den unterschiedlichen Volumenschwund beim Aushärten der Teile entsteht das notwendige Spiel zwischen Lagerbuchse und Körper. Eine unterschiedliche Volumenkontraktion von Lagerbuchse und Körper lässt sich auf unterschiedliche Weise erzielen. Die Lagerbuchse und der Körper können beispielsweise aus Werkstoffen mit einer unterschiedlichen Volumenkontraktion gefertigt werden. Es ist jedoch auch möglich, die Lagerbuchse und den Körper aus dem gleichen Werkstoff, jedoch mit unterschiedlichen Wandstärken zu fertigen. Eine weitere Möglichkeit zur Verhinderung eines Anhaftens von Körper und Lagerbuchse besteht darin, die Lagerbuchse und den Körper des Bauteils aus Werkstoffen mit unterschiedlichen Schmelzpunkten zu fertigen. Vor dem Einspritzen der Lagerbuchse oder dem Aufspritzen des Körpers können jedoch auch das oder die zuerst gespritzten Teile mit einer Antihaftbeschichtung, beispielsweise einem Wachs, versehen werden. Außerdem kann die freie Drehbarkeit des Körpers auf der Lagerbuchse auch dadurch erreicht werden, dass das oder die zuerst gegossenen Elemente des Bauteils aus einem Werkstoff mit selbstschmierenden Eigenschaften gefertigt werden. Die einzelnen Maßnahmen zur Verhinderung eines Anhaftens der nacheinander gespritzten Elemente des Bauteils können selbstverständlich auch in beliebiger Weise miteinander kombiniert werden. Als Werkstoffe für die Komponenten des Bauteils kommen alle spritzgießbaren, thermoplastischen, amorphen und teilkristallinen Werkstoffe in Frage, wobei diese Werkstoffe entweder ungefüllt und unmodifiziert oder aber mit allen technisch bekannten Füllstoffen oder Mischungen derselben gefüllt sowie mit allen technisch bekannten und denkbaren Zusätzen modifiziert sein können. Als Zusätze kommen beispielsweise Wachse, PTFE, reibungsmindernde Zusätze und Stabilisatoren in Frage. Auch Werkstoffmischungen sind selbstverständlich einsetzbar. Falls alle Elemente des Bauteils aus dem gleichen Werkstoff gefertigt werden, kann zur Herstellung ein Einkomponentenspritzgießverfahren eingesetzt werden, bei dem alle Teile gleichzeitig gespritzt werden. Es kann jedoch auch ein so genanntes Mehrfarbenspritzgießverfahren eingesetzt werden, bei dem zeitlich verzögert die einzelnen Elemente des Bauteils unter Zuhilfenahme von zwei oder mehreren Schneckenplastifiziersystemen aus dem gleichen Werkstoff gespritzt werden. Bestehen die Elemente des Bauteils aus unterschiedlichen Werkstoffen, so kann das Bauteil durch ein Mehrkomponentenspritzgießverfahren gefertigt werden, bei dem zeitlich verzögert die einzelnen Elemente unter Zuhilfenahme von zwei oder mehreren Schneckenplastifiziersystemen aus verschiedenen Werkstoffen gespritzt werden.

Die Erfindung umfaßt auch ein spritzgegossenes Bauteil bestehend aus einem ein- oder mehrteiligen Körper sowie einer Lagerbuchse, das nach einem erfindungsgemäßen Verfahren gefertigt ist.

Nachfolgend wird ein mögliches Ausführungsbeispiel eines erfindungsgemäßen Herstellungsverfahrens am Beispiel einer Laufrolle mit Bezug auf die Zeichnung näher erläutert.

Im Einzelnen zeigen:
- Fig. 1: eine schematische Ansicht von Hohlräumen einer Spritzgießformhälfte zur Herstellung einer Laufrolle mit zwei Rollenteilen und einer Lagerbuchse;
- Fig. 2: einen Teilschnitt durch die Spritzgießformhälften bei der Herstellung des ersten Rollenteils;
- Fig. 3: einen Teilschnitt durch die Spritzgießformhälften nach der Herstellung des zwei- ten Rollenteils;
- Fig. 4: einen Teilschnitt durch die Spritzgießformhälften während der Montage der beiden Rollenteile;
- Fig. 5: einen Teilschnitt durch die Spritzgießformhälften nach dem Einspritzen der Lagerbuchse in die montierten Rollenteile.

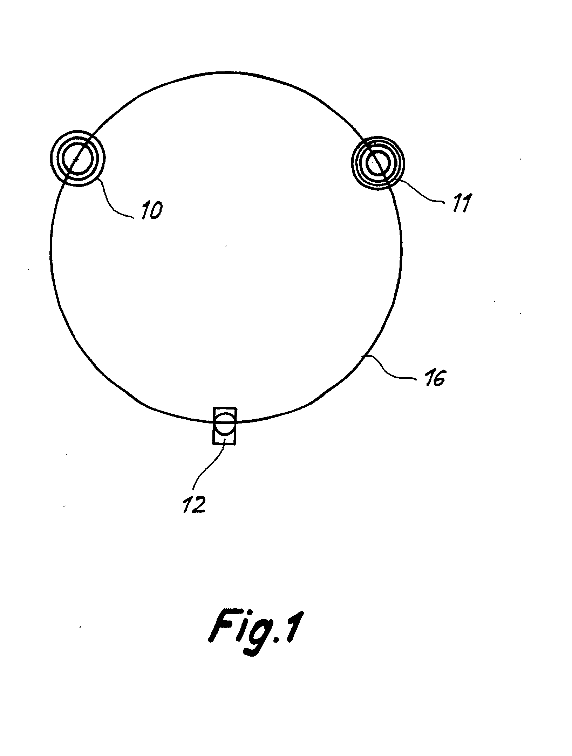

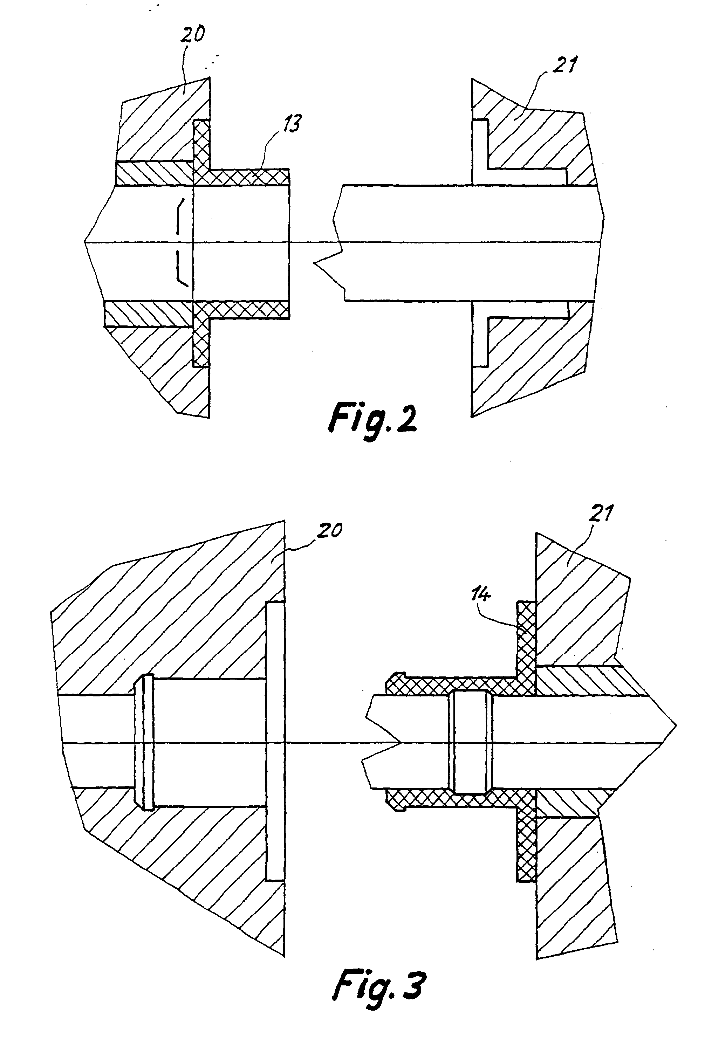

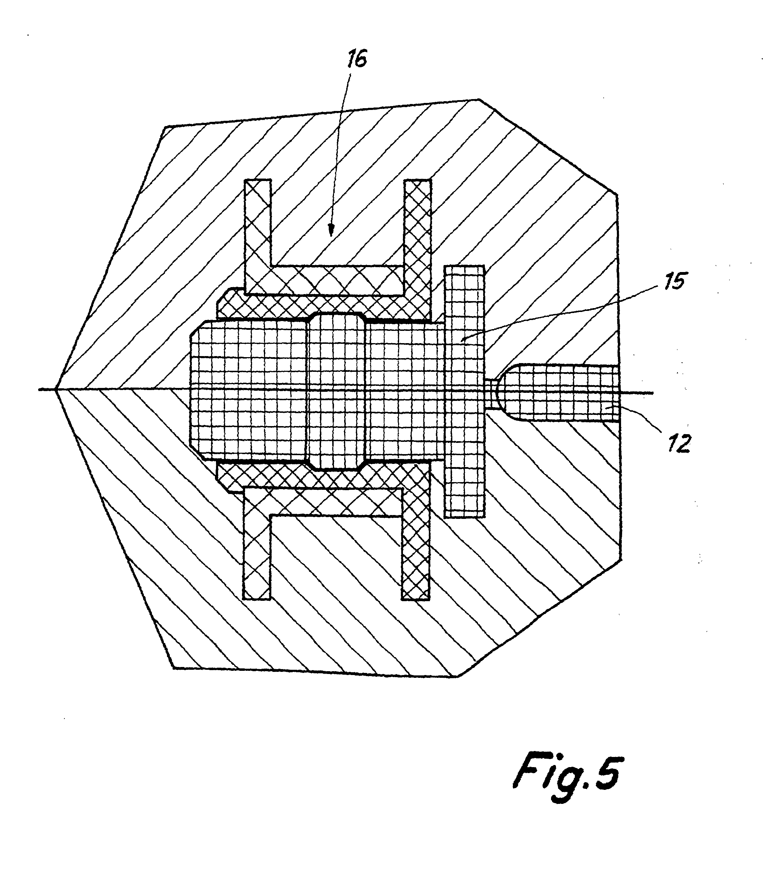

Fig. 1 zeigt in der Draufsicht drei Hohlräume 10, 11, 12 einer Spritzgießformhälfte, die der Fertigung zweier Rollenteile 13 (Fig. 2) und 14 (Fig. 3) sowie dem Einspritzen einer Lagerbuchse 15 (Fig. 5) dienen. Die Hohlräume 10, 11, 12 sind dabei auf einem Kreis 16 angeordnet, der ermöglicht, dass nach dem Spritzen der beiden Rollenteile 13, 14 diese in der Spritzgießform montiert und anschließend in die montierten Teile die Lagerbuchse eingespritzt werden kann, wie anhand der folgenden Figuren erläutert wird.

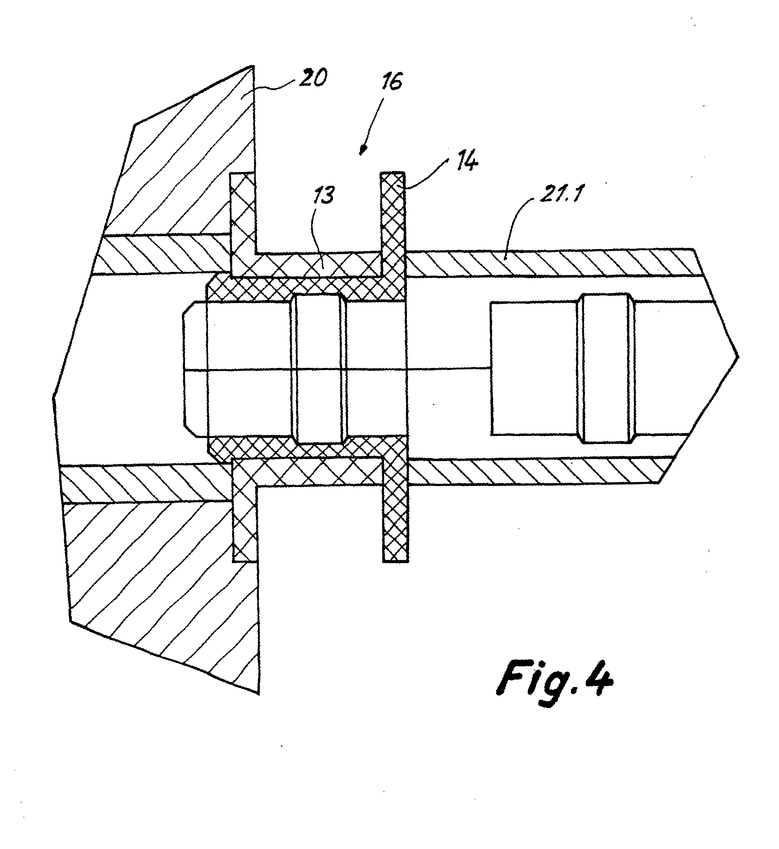

Zunächst wird, wie Fig. 2 zeigt, der erste Rollenteil 13 in der Spritzgießform mit den zwei Spritzgießformhälften 20, 21 gespritzt. Dann werden die Spritzgießformhälften 20 und 21 geöffnet und der Rollenteil 13 in der Spritzgießformhälfte 20 festgehalten. Gleichzeitig oder auch zeitlich verzögert kann, wie Fig. 3 zeigt, der zweite Rollenteil 14 in der Spritzgießform mit den beiden Spritzgießformhälften 20, 21 gespritzt werden. Nach dem öffnen der Form wird der Rollenteil 14 an der Spritzgießformhälfte 21 festgehalten. Anschließend werden die beiden Spritzgießformhälften 20, 21 gegeneinander verdreht, bis sich die beiden Rollenteile in den Spritzgießformhälften 20 und 21 gegenüberliegen. Dann ist es möglich, mit einem stempelartigen Teil 21.1 der Spritzgießformhälfte 21 (Fig. 4) die beiden Rollenteile 13, 14 durch Aufeinanderpressen zu montieren. Es entsteht damit ein zweiteiliger Rollenkörper 16. Dieser Körper 16 wird weiter in der Spritzgießformhälfte 20 festgehalten und anschließend die beiden Spritzgießformhälften 20 und 21 wieder gegeneinander verdreht, bis der Hohlraum 12 der Spritzgießformhälfte 21 dem Rollenkörper 16 gegenüberliegt (Fig. 5). Es wird dann die Lagerbuchse 15 in den Körper 16 eingespritzt. Die Lagerbuchse 15 kann dabei aus dem gleichen Werkstoff oder auch aus einem anderen Werkstoff als der Körper 16 bestehen.

## Patentansprüche

1. Verfahren zur Herstellung eines spritzgegossenen Bauteils bestehend aus einem mehrteiligen Körper (16) sowie einer Lagerbuchse (15), **dadurch gekennzeichnet, dass** zunächst die Teile des Körpers (16) in einer Spritzgießform (20, 21) gegossen und montiert werden und anschließend die Lagerbuchse (15) in den in der Spritzgießform festgehaltenen Körper (16) eingespritzt wird.

2. Verfahren zur Herstellung eines spritzgegossenen Bauteils bestehend aus einem mehrteiligen Körper (16) sowie einer Lagerbuchse (15), **dadurch gekennzeichnet, dass** zunächst die Lagerbuchse (15) in einer Spritzgießform (20, 21) gegossen und anschließend die Teile des Körpers (16) auf die in der Spritzgießform festgehaltene Lagerbuchse (15) aufgespritzt werden.

3. Verfahren nach Anspruch 1 oder 2, **dadurch gekennzeichnet, dass** die Lagerbuchse (15) eine andere Volumenkontraktion aufweist als der Körper (16) des Bauteils.

4. Verfahren nach Anspruch 3, **dadurch gekennzeichnet, dass** die Lagerbuchse (15) und der Körper (16) aus Werkstoffen mit einer unterschiedlichen Volumenkontraktion gefertigt werden.

5. Verfahren nach einem der Ansprüche 1 bis 4, **dadurch gekennzeichnet, dass** die Lagerbuchse (15) und der Körper (16) mit unterschiedlichen Wandstärken gefertigt werden.

6. Verfahren nach einem der Ansprüche 1 bis 5, **dadurch gekennzeichnet, dass** die Lagerbuchse (15) und der Körper (16) des Bauteils aus Werkstoffen mit unterschiedlichen Schmelzpunkten gefertigt werden.

7. Verfahren nach einem der Ansprüche 1 bis 6, **dadurch gekennzeichnet, dass** vor dem Einspritzen der Lagerbuchse (15) oder dem Aufspritzen des Körpers (16) das oder die zuerst gespritzten Teile (15, 16) mit einer Antihaftbeschichtung versehen werden.

8. Verfahren nach einem der Ansprüche 1 bis 7, **dadurch gekennzeichnet, dass** das oder die zuerst gegossenen Elemente (15, 16) des Bauteils aus einem Werkstoff mit selbstschmierenden Eigenschaften gefertigt werden.

9. Spritzgegossenes Bauteil bestehend aus einem mehrteiligen Körper (16) sowie einer Lagerbuchse (15), hergestellt nach einem Verfahren nach einem der Ansprüche 1 bis 8.

## Claims

1. Method of manufacturing an injection-moulded component consisting of a multipart body (16) and a bearing bush (15), **characterized in that** first of all the parts of the body (16) are cast and mounted in an injection mould (20, 21 ) and then the bearing bush (15) is injected into the body (16) held in the injection mould.

2. Method of manufacturing an injection-moulded component consisting of a multipart body (16) and a bearing bush (15), **characterized in that** first of all the bearing bush (15) is cast in an injection mould (20, 21) and then the parts of the body (16) are sprayed onto the bearing bush (15) held in the injection mould.

3. Method according to Claim 1 or 2, **characterized in that** the bearing bush (15) has a different volume contraction from that of the body (16) of the component.

4. Method according to Claim 3, **characterized in that** the bearing bush (15) and the body (16) are made of materials with different volume contractions.

5. Method according to one of Claims 1 to 4, **characterized in that** the bearing bush (15) and the body (16) are made with walls of different thickness.

6. Method according to one of Claims 1 to 5, **characterized in that** the bearing bush (15) and the body (16) of the component are made of materials with different melting points.

7. Method according to one of Claims 1 to 6, **characterized in that**, prior to injecting the bearing bush (15) or spraying-on the body (16), the first injected part or parts (15, 16) is or are given an anti-adhesive coating.

8. Method according to one of Claims 1 to 7, **characterized in that** the first cast element or elements (15, 16) of the component is or are made of a material with self-lubricating properties.

9. Injection-moulded component consisting of a multipart body (16) and a bearing bush (15), produced by a method according to one of Claims 1 to 8.

## Revendications

1. Procédé de fabrication d'un composant moulé par injection constitué d'un corps (16) en plusieurs parties ainsi que d'un coussinet (15), **caractérisé en ce que** l'on coule d'abord les parties du corps (16) dans un moule d'injection (20, 21) et on les monte, et puis on injecte le coussinet (15) dans le corps (16) maintenu fermement dans le moule d'injection.

2. Procédé de fabrication d'un composant moulé par injection constitué d'un corps (16) en plusieurs parties ainsi que d'un coussinet (15), **caractérisé en ce que** l'on coule d'abord le coussinet (15) dans un moule d'injection (20, 21), et puis on injecte les parties du corps (16) sur le coussinet (15) maintenu fermement dans le moule d'injection.

3. Procédé selon la revendication 1 ou 2, **caractérisé en ce que** le coussinet (15) présente une contraction de volume autre que le corps (16) du composant.

4. Procédé selon la revendication 3, **caractérisé en ce que** le coussinet (15) et le corps (16) sont fabriqués dans des matériaux ayant une contraction de volume différente.

5. Procédé selon l'une des revendications 1 à 4, **caractérisé en ce que** le coussinet (15) et le corps (16) sont fabriqués avec des épaisseurs de paroi différentes.

6. Procédé selon l'une des revendications 1 à 5, **caractérisé en ce que** le coussinet (15) et le corps (16) du composant sont fabriqués dans des matériaux ayant des points de fusion différents.

7. Procédé selon l'une des revendications 1 à 6, **caractérisé en ce qu'**avant l'injection du coussinet (15) ou l'injection du corps (16), la ou les parties (15, 16) injectées en premier sont pourvues d'un revêtement anti-adhésif.

8. Procédé selon l'une des revendications 1 à 7, **caractérisé en ce que** le ou les éléments (15, 16) du composant moulés en premier sont fabriqués dans un matériau ayant des propriétés d'autolubrification.

9. Composant moulé par injection, constitué d'un corps (16) en plusieurs parties ainsi que d'un coussinet (15), fabriqué selon un procédé selon l'une des revendications 1 à 8.
